# EUROPÄISCHE PATENTSCHRIFT

(11) **EP 0 872 619 B1**
(45) Veröffentlichungstag und Bekanntmachung des Hinweises auf die Patenterteilung: **12.03.2003**
(21) Anmeldenummer: 98105927.2
(22) Anmeldetag: 01.04.1998
(51) Int. Cl.: E06B 1/60, F16B 5/02

(54) **Justierelement**
Adjusting element
Elément d'ajustement

(30) Priorität: 14.04.1997 DE 19715496
(43) Veröffentlichungstag der Anmeldung: 21.10.1998
(73) Patentinhaber: SFS intec Holding AG, 9435 Heerbrugg (CH)
(72) Erfinder: Steffen, Markus, 9472 Grabs (CH)
(74) Vertreter: Ludescher, Hans

(56) Entgegenhaltungen:
- EP-A- 0 562 324
- WO-A-91/14846
- DE-A- 3 523 505
- DE-A- 3 901 144
- DE-U- 8 601 106
- FR-A- 2 215 849
- FR-A- 2 680 208
- US-A- 5 234 300

## Beschreibung

Die Erfindung betrifft ein Justierelement mit einem Bolzen oder einer Hülse, welcher bzw. welche ein wenigstens über einen Teil seiner bzw. ihrer Länge verlaufendes Gewinde oder mehrere Gewindeabschnitte aufweist, wobei an einem Ende des Bolzens oder der Hülse ein Angriff für ein Drehwerkzeug ausgebildet ist und am anderen Ende Abstützteile, Laschen oder Kontermuttern montiert sind.

Solche Justierelemente werden beispielsweise bei Fenster- oder Türrahmen eingesetzt, um diese in einer Gebäudeöffnung einrichten und fixieren zu können. Es gibt bereits verschiedene Lösungsvorschläge für solche Justierelemente.

Bei einer dieser bekannten Ausgestaltungen (DE-A-35 10 584) wird eine Gewindehülse, welche eine durchgehende, im Querschnitt sechseckige Öffnung aufweist, in eine Bohrung eines Fensterrahmens eingedreht, wobei diese Hülse auf einen entsprechend langen, als Sechskant ausgeführten Antriebsteil aufgeschoben werden kann, um dadurch eine Ausrichtung der einzudrehenden Hülse zu bewirken. Als zusätzliche Möglichkeit ist angeführt, an einem Ende dieser Gewindehülse einen Außensechskant vorzusehen. Mit einer solchen Ausführung einer Gewindehülse kann wohl von beiden Enden her mit einem Werkzeug gearbeitet werden, doch weist eine solche Gewindehülse nicht den notwendigen großen Abstützbereich für die Justierung eines Fenster- oder Türrahmens oder gar von anderen, noch schwereren Bauteilen ist. Dazu müssen an dem außerhalb eines Rahmens liegenden Ende Abstützteile, Laschen, Kontermuttern oder dergleichen montiert werden, so daß in der Regel von diesem außen liegenden Ende des Bolzens bzw. der Hülse her kein Angriff für ein Drehwerkzeug möglich ist.

Dies ist beispielsweise aus einer bekannten Vorrichtung zur Justierung von Fensterrahmen (DE-A-35 23 505) ersichtlich.

Für die Justierarbeiten ergeben sich bei solchen Konstruktionen keine Probleme, da ja das in den Rahmen hineinragende Ende als Angriff für ein Drehwerkzeug zur Verfügung steht.

Ein solches Justierelement bzw. der einen Teil des Justierelementes bildende Bolzen oder eine entsprechende Hülse muß aber vorab in eine in dem Rahmen bzw. in einem sonstigen Bauteil bereits integrierte Gewindehülse eingedreht werden. Wenn nun in den Außenabmessungen relativ große Abstützteile, Laschen usw. vorhanden sind, ergeben sich Probleme beim Eindrehen des Bolzens bzw. der Hülse in die am Rahmen bereits vorgesehene Gewindehülse. Die Bolzen können nur mit entsprechendem Fingerspitzengefühl und einem großen Zeitaufwand montiert werden, damit sie in der Stellung sind, um den Fensterrahmen oder einen sonstigen Bauteil in eine Gebäudeöffnung einsetzen bzw. am Boden abstützen zu können.

Die vorliegende Erfindung hat sich daher zur Aufgabe gestellt, ein Justierelement der eingangs genannten Art zu schaffen, welches nicht nur einfach verstellbar ist, sondern auch in einfacher Art und Weise in dem betreffenden Bauteil, also beispielsweise in einem Fenster- oder Türrahmen, montiert werden kann.

Zur Lösung dieser Aufgabe wird vorgeschlagen, daß an beiden Enden des Bolzens, der Hülse oder dergleichen jeweils ein Angriff für ein Drehwerkzeug ausgebildet ist. Bei solchen Bolzen bzw. Hülsen ist der übliche Angriff an dem einen Ende vorhanden, um einerseits die notwendige Justierung vornehmen zu können, andererseits ist an dem gegenüberliegenden Ende des Bolzens bzw. der Hülse ein zusätzlicher Angriff für ein Drehwerkzeug ausgebildet. Deshalb ist es in einfacher Weise möglich geworden, den Bolzen bzw. die Hülse, welcher bzw. welche bereits einen entsprechend großen Abstützteil, eine Lasche, eine Kontermutter oder dergleichen trägt, in die im Rahmen eingesetzte Gewindehülse einzudrehen. Dadurch kann eine wesentliche Erleichterung der Montagearbeit, welche größtenteils direkt auf der Baustelle erfolgt, erzielt werden.

Eine konkrete Ausführungsform der Erfindung sieht vor, daß der Bolzen, die Hülse oder dergleichen als in eine Bohrung oder eine Hülse mit Innengewinde bei einem zu justierenden Baukörper einsetzbare Gewindestange ausgeführt ist, und daß am einen Ende des Bolzens, der Hülse oder dergleichen ein Abstützteil, eine Lasche oder dergleichen um dessen bzw. deren Mittelachse verdrehbar, jedoch gegen axiales Verschieben gesichert gehalten ist. Da der Abstützteil, die Lasche oder dergleichen um die Mittelachse des Bolzens bzw. der Hülse verdrehbar ist, kann dieser Teil in der Regel nicht als eventueller Handgriff angesehen werden, um den Bolzen bzw. die Hülse einzudrehen. Eine solche Möglichkeit wäre vielleicht dann gegeben, wenn die Verbindung zwischen dem Abstützteil, der Lasche oder dergleichen und dem Bolzen, der Hülse oder dergleichen gegenseitig verdrehbar, jedoch schwergängig ausgeführt wäre. Diesfalls ergibt sich aber wieder ein Problem, wenn sich der Bolzen, die Hülse oder dergleichen nur schwer in die Gewindehülse im Rahmen bzw. in einem sonstigen Bauteil eindrehen läßt. Dann ist wiederum der zusätzliche Angriff für ein Drehwerkzeug von besonderem Vorteil. Außerdem ergibt sich eine wesentlich einfachere und korrektere Ausrichtung des Bolzens, der Hülse oder dergleichen zum Eindrehen in eine Gewindehülse, wenn der Bolzen, die Hülse oder dergleichen auf einem entsprechenden Drehwerkzeug ausgerichtet gehalten werden kann.

Gerade bei Anordnung von Abstützteilen, Laschen, Kontermuttern oder dergleichen ist es überhaupt nicht selbstverständlich, praktisch an der Rückseite dieser Abstützteile, Laschen usw. Angriffe für ein Werkzeug vorzusehen. Da es ja einer zusätzlichen Verbindung zwischen dem Bolzen, der Hülse oder dergleichen und einem Abstützteil, einer Lasche oder dergleichen bedarf, wurde die Anordnung eines Angriffes für ein Drehwerkzeug in diesem Bereich von vorneherein als völlig unmöglich angesehen.

Daß jedoch speziell diese erfindungsgemäße Maßnahme wesentliche Vorteile mit sich bringt, haben erste konkrete Versuche bereits eindeutig bestätigt.

Weiter wird vorgeschlagen, daß an den beiden Enden des Bolzens, der Hülse oder dergleichen Angriffe für gleichartige Drehwerkzeuge ausgebildet sind. Es kann dadurch an beiden Enden des Bolzens, der Hülse oder dergleichen das gleiche Drehwerkzeug eingesetzt werden. Dies bedeutet auch für die Logistik auf der Baustelle einen besonderen Vorteil, da stets nur ein Werkzeug zur Verfügung stehen muß.

Im Rahmen der Erfindung ist es gerade bei verschiedenen Herstellungsvarianten und Verwendungsmöglichkeiten zwischen Bolzen, Hülse oder dergleichen und Abstützteil, Laschen oder dergleichen vorteilhaft, wenn an den beiden Enden des Bolzens, der Hülse oder dergleichen Angriffe für verschiedenartige Drehwerkzeuge ausgebildet sind. Es ist dann ein Werkzeug für die Montage und ein Werkzeug für die Justierung vorhanden, wobei in diesem Zusammenhang auch die Möglichkeit besteht, die beiden Angriffsarten an einem Drehwerkzeug zu kombinieren.

Eine sehr einfache konstruktive Gestaltung ist dann gegeben, wenn an den beiden Enden des Bolzens, der Hülse oder dergleichen ein Innenangriff ausgebildet ist. Es wäre aber auch denkbar, daß an einem oder an beiden Enden des Bolzens, der Hülse oder dergleichen ein Schraubenzieherschlitz, ein Innen- oder Außenangriff oder dergleichen ausgebildet ist. Somit ist die Möglichkeit vorhanden, je nach Art des Justierelementes und je nach Einsatzbereich unterschiedliche Angriffe für Drehwerkzeuge vorzusehen.

Gerade in diesem Zusammenhang ist es ebenfalls vorteilhaft, daß der Bolzen über seine ganze Länge mit einem Gewinde versehen, also durchgehend als Gewindestange ausgeführt ist. Es bedarf für die erfindungsgemäße Ausgestaltung keiner vorstehender Teile, wie eine Art Schraubenköpfe, um mit komplizierten Maßnahmen beispielsweise einen Schraubenschlüssel ansetzen zu können.

Eine besonders vorteilhafte konstruktive Ausgestaltung der Erfindung liegt darin, daß am anderen Ende des Bolzens, der Hülse oder dergleichen ein Zapfen oder ein z.B. im Durchmesser gegenüber Bolzen oder Hülse reduziertes Rohrstück ausgebildet ist, welcher bzw. welches durch eine Öffnung in einem Abstützteil, einer Lasche oder dergleichen eingreift und an deren Unterseite durch einen Nietvorgang den Öffnungsrand hintergreift. Dadurch ist eine in üblicher Weise einfache Halterung eines Abstützteiles, einer Lasche oder dergleichen am Bolzen, der Hülse oder dergleichen möglich, wobei durch den notwendigen Nietvorgang gleichzeitig ein Angriff für ein Drehwerkzeug geschaffen werden kann. Um die besonderen Möglichkeiten zu schaffen, bedarf es lediglich einer besonderen Ausgestaltung des Nietwerkzeuges.

Weitere erfindungsgemäße Merkmale und besondere Vorteile werden in der nachstehenden Beschreibung anhand der Zeichnungen noch näher erläutert. Es zeigen:
- Fig. 1: einen Vertikalschnitt durch einen Fensterrahmen mit eingesetztem Justierelement;
- Fig. 2: das beim Ausführungsbeispiel nach Fig. 1 eingesetzte Justierelement, wobei der eingesetzte Bolzen teilweise aufgeschnitten dargestellt ist;
- Fig. 3: ein im wesentlichen gleich gestaltetes Justierelement wie bei der Ausführung nach den Fig. 1 und 2, wobei jedoch anstelle einer Lasche ein Abstützteil angeordnet ist;
- Fig. 4: wiederum ein Justierelement, wobei eine andere Art von Abstützteil vorgesehen ist;
- Fig. 5: das die Verbindung zwischen einer Hülse und einem Abstützteil zeigende Detail, gegenüber der Darstellung in Fig. 4 wesentlich vergrößert.

Bei der vorliegenden Erfindung geht es also um ein Justierelement 3 für in eine Gebäudeöffnung einsetzbare Baukörper, wie z.B. Fenster- oder Türrahmen 1. Nachstehend wird lediglich von einem Fensterrahmen 1 gesprochen, obwohl die Erfindung selbstverständlich auch bei Tür- oder Torrahmen, aber auch bei Rahmen, welche feste Verkleidungselemente oder Wandelemente aufnehmen, einsetzbar ist. Das erfindungsgemäße Justierelement ist ebenfalls in anderen Bereichen einsetzbar. So beispielsweise bei irgendwelchen Einbauteilen, beim lagegerechten Aufstellen von Möbeln, Maschinen, Maschinenteilen usw.

Die hier gezeigte Ausführung betrifft einen Fensterrahmen 1, welcher aus einem Kunststoff-Hohlprofil 9 und einem eingesetzten Metallprofil 10 gebildet ist. An den Stellen, wo Justierelemente einzusetzen sind, wird eine Hülse 8 mit Innengewinde angeordnet. Diese Hülse 8 ist als eine Art Gewindehülse ausgebildet, welche in dem Fensterrahmen 1 ähnlich einer Blindnietmutter verankert wird. An der Oberseite des Rahmens 1 ist eine Bohrung 7 vorgesehen, durch welche hindurch eine Bedienung des Verstellteiles erfolgen kann.

Beim Einsatz eines Rahmens 1 aus Holz wird anstelle der hier gezeigten Hülse 8 eine entsprechende Einpreßmutter in eine Bohrung im Holzrahmen eingesetzt, wobei die Verdrehsicherheit dannzumal durch an einem umlaufenden Flansch vorgesehene Zacken bewirkt wird.

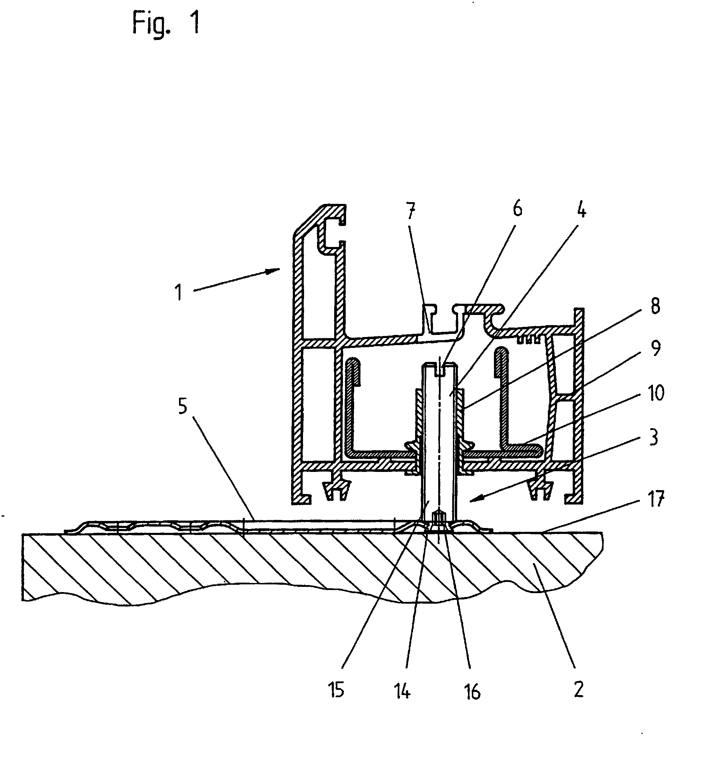

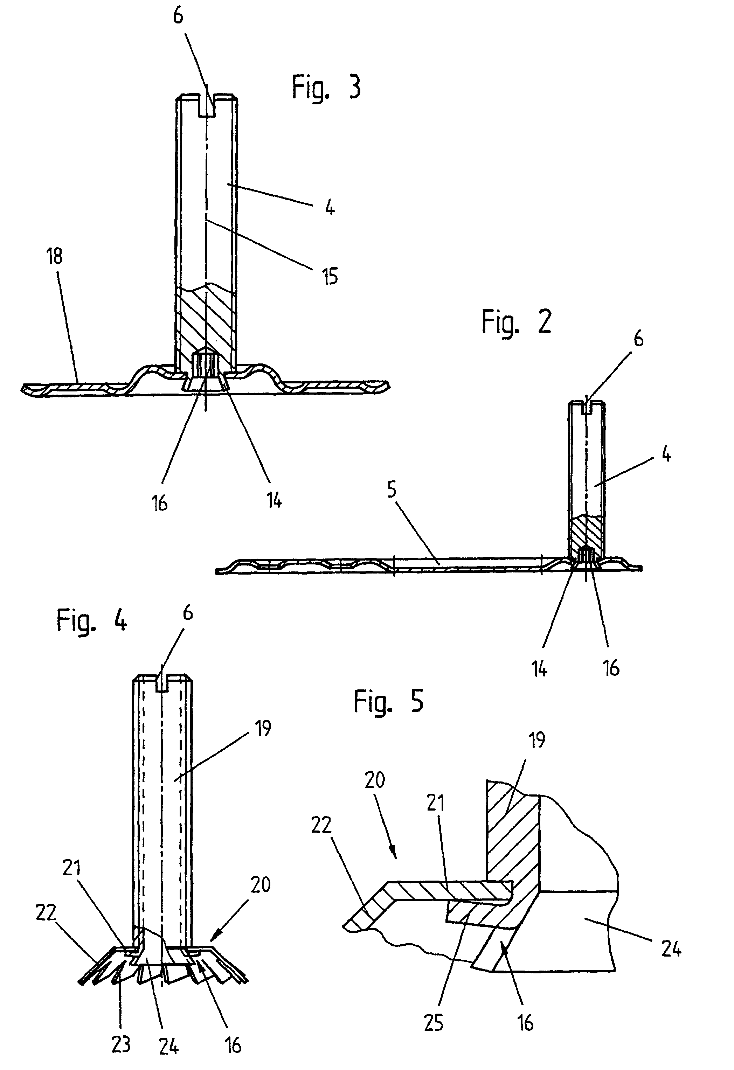

Das Justierelement 3 besteht bei der Ausführung nach den Fig. 1 und 2 im wesentlichen aus einem Bolzen 4 und einer Lasche 5. Der Bolzen 4 ist als Gewindestange ausgeführt und als solche in die mit einem Innengewinde versehene Hülse 8 eindrehbar. Am einen Ende des Bolzens 4 ist die Lasche 5 um dessen Mittelachse 15 verdrehbar, jedoch gegen axiales Verschieben gesichert gehalten. Gegebenenfalls ist eine schwergängige gegenseitige Verdrehbarkeit sinnvoll, um nicht schon bei dem Einsetzen des Fensterrahmens 1 in die Gebäudeöffnung ein ständiges Verdrehen der Lasche 5 hervorzurufen. Am anderen, der Lasche 5 abgewandten Ende des Bolzens 4, d.h. an dem in Montagestellung in den Fensterrahmen 1 eingeführten Ende, ist ein Angriff 6 für ein Drehwerkzeug ausgebildet.

Mittels des erfindungsgemäßen Justierelementes 3 wird der Rahmen 1 an beispielsweise einer unteren Begrenzung 17 einer in einer Wand 2 vorgesehenen Gebäudeöffnung abgestützt. Durch Verdrehen des Bolzens 4 kann der Fensterrahmen 1 gegenüber der Begrenzung 17 verstellt werden, so daß eine einfache Einstellung, z.B. unter Zuhilfenahme einer Wasserwaage, erfolgen kann. Der Bolzen 4 stützt sich dabei direkt auf der Begrenzung 17 bzw. durch die unmittelbar an den Bolzen 4 anschließende Lasche 5 ab. Somit sind zwischen dem Bolzen 4 und der Begrenzung 17 der Wand 2 praktisch keine nachgiebigen Teile vorhanden, so daß eine feste und ordnungsgemäße Justierung erfolgen kann.

Der Bolzen 4 ist zweckmäßig über dessen ganze Länge mit einem Gewinde versehen, also durchgehend als Gewindestange ausgeführt. Es wäre aber auch denkbar, lediglich Abschnitte des Bolzens 4 mit einem Gewinde zu versehen, was insbesondere dann von Vorteil ist, wenn der Bolzen 4 relativ lang ausgeführt werden muß, d.h., wenn der Abstand zwischen dem Fensterrahmen 1 und der Begrenzung 17 der Wand entsprechend groß ist und deshalb nur mit langen Bolzen 4 überbrückt werden kann.

Die Befestigung zwischen dem Bolzen 4 und der Lasche 5 kann in einfacher Weise durch einen Nietvorgang erfolgen, wobei am entsprechenden freien Ende des Bolzens 4 ein Zapfen 14 ausgebildet ist, welcher durch eine Öffnung in der Lasche 5 eingreift und an der Unterseite vernietet wird. Dadurch hintergreift der Bolzen 4 die Lasche 5 im Bereich der entsprechenden Öffnung, so daß die beiden Teile unverlierbar miteinander verbunden sind. Durch den Einsatz eines ganz speziellen Nietwerkzeuges kann daher auch an dem der Lasche 5 zugewandten Ende des Bolzens 4 ein Werkzeugangriff 16 vorgesehen werden. Somit ist an beiden Enden des Bolzens 4 ein Werkzeugangriff 6 bzw. 16 vorhanden, so daß einerseits der Angriff 6 für die Justierung benutzt werden kann und andererseits ein Angriff 16 für ein Drehwerkzeug vorhanden ist, um den Bolzen 4 in die Gewindehülse 8 eindrehen zu können. Es muß ja eine Montage bzw. eine Vormontage des Bolzens 4 und somit des ganzen Justierelementes 3 erfolgen, da das Justierelement 3 nach dem Einsetzen des Fensterrahmens 1 in die Gebäudeöffnung nicht mehr montiert werden kann. Da gerade an dem der Lasche 5 zugewandten Ende des Bolzens 4 ebenfalls ein Drehwerkzeug angesetzt werden kann, wird die Montage des Justierelementes 3 wesentlich erleichtert. Auch wenn hier nur ein Werkzeug nach Art eines Schraubenziehers eingesetzt wird, ergibt sich eine wesentliche Zeitersparnis, da das direkte Erfassen des Bolzens 4 von Hand und das Eindrehen, ebenfalls praktisch von Hand und ohne Zuhilfenahme eines Werkzeuges mit besonderen Problemen, vonstatten gehen kann.

Daher ist es als wesentliche erfinderische Maßnahme zu betrachten, an dem Bolzen neben dem Angriff 6 einen weiteren Angriff 16 anzuordnen, welcher an jenem Ende vorgesehen ist, welches die Lasche 5 oder bei anderen Ausführungsbeispielen einen Abstützteil oder dergleichen trägt. Es ist dabei ein besonders konstruktiver Vorteil, dass der Angriff 16 am Bolzen 4 an dem die Lasche 5 durchdringenden Abschnitt des Bolzens 4 ausgebildet ist.

Bei der Ausführung nach Fig. 3 ist ein gleich gestalteter Bolzen 4 wie bei der Ausgestaltung nach den Fig. 1 und 2 vorgesehen, wobei jedoch anstelle einer Lasche 5 ein Abstützteil 18 vorgesehen ist, welcher im Durchmesser gegenüber dem Bolzen 4 relativ groß ausgeführt ist.

Die Fig. 1 bis 3 zeigen eine Ausgestaltung, bei welcher an einem Ende des Bolzens 4 der Angriff 6 nach Art eines Schraubenzieherschlitzes und der Angriff 16 als Innenangriff ausgeführt ist. Es wäre durchaus denkbar, in dem Bolzen 4 anstelle des als Schraubenzieherschlitz ausgebildeten Angriffes 6 ebenfalls einen Innenangriff oder aber einen Außenangriff vorzusehen. Dabei ist es ebenfalls möglich, an beiden Enden des Bolzens 4 Angriffe für verschiedenartige Drehwerkzeuge oder aber für gleichartige Drehwerkzeuge auszubilden.

Aus den Fig. 4 und 5 ist ersichtlich, daß die erfindungsgemäßen Maßnahmen in gleicher Weise auch bei einer Konstruktion anwendbar sind, bei der anstelle eines Bolzens 4 gemäß den Fig. 1 bis 3 eine Hülse 19 eingesetzt wird. Hier ist ein Abstützteil 20 nach Art einer Fächerscheibe vorgesehen, wobei dieser Abstützteil 20 eine Art Bodenteil 21 und einen sich kegelstumpfartig erweiternden Ringteil 22 aufweist. Der Ringteil 22 weist Einschnitte 23 auf, welche dem Ringteil 22 die fächerartige Ausgestaltung verleihen. Zur Verbindung zwischen dem Abstützteil 21 und der Hülse 19 weist der Bodenteil 10 eine mittige Öffnung auf, in welche ein am freien Ende der Hülse 19 ausgebildeter Fortsatz 24 eingreift. Dieser Fortsatz 24 ist zur unverlierbaren Halterung des Abstützteiles 20 verformt. Dabei kann beispielsweise vorgesehen werden, Abschnitte 25 am freien Ende des Fortsatzes 24 im wesentlichen rechtwinklig umzubiegen, wobei mit den so umgebogenen Abschnitten 25, welche im wesentlichen Laschen bilden, der Bodenteil 10 des Abstützteiles 20 annähernd parallel zu dessen Ausrichtung hintergriffen wird. Auf diese Weise kann auch veranlaßt werden, daß der Abstützteil 20 trotz entsprechender Halterung an der Hülse 19 um die Achse 15 der Hülse 19 verdrehbar bleibt.

Es ist aus den Ausgestaltungen nach den Fig. 4 und 5 ersichtlich, daß auch dort ein entsprechender Werkzeugangriff 16 an dem einen Ende der Hülse 19 ausgebildet ist. Gerade durch die vorgesehenen, umgebogenen Abschnitte 25 wird eine Art Schlitz geschaffen und somit ein Werkzeugangriff 16 beispielsweise für einen Schraubenzieher. Natürlich sind im Rahmen der Erfindung auch bei dieser Konstruktion die verschiedensten Ausgestaltungen von Werkzeugangriffen sowohl an diesem als auch am anderen Ende der Hülse 19 möglich.

Auf die erfindungsgemäße Art und Weise kann also auch bei einer Konstruktion nach den Fig. 4 und 5 an beiden Enden der Hülse 19 ein Angriff 6 bzw. 16 für ein Drehwerkzeug vorgesehen werden. Bei dieser Konstruktion wird eine Gewindehülse eingesetzt, welche mit einem entsprechenden Außengewinde versehen ist und damit die gleiche Funktion erfüllt wie der Bolzen 4 gemäß den Fig. 1 bis 3. Gerade bei der Ausgestaltung nach den Fig. 4 und 5 wäre es auch denkbar, einen durchgehend gleichen Innenquerschnitt zum Angriff eines Drehwerkzeuges vorzusehen, wobei trotz der zusätzlichen Befestigung eines Abstützteiles 20 oder beispielsweise auch einer entsprechenden Lasche 5 oder eines Abstützteiles 18 keine Zerstörung des im Querschnitt durchgehenden Innenangriffes erfolgt. Es ist also auch bei durchgehender Ausgestaltung eines Innenangriffes trotz der als erfindungswesentlich und notwendig erachteten zusätzlichen Montage eines Abstützteiles oder einer Lasche möglich, bei einer Hülse 19 an beiden Enden ein Drehwerkzeug angreifen zu lassen.

In der Regel werden solche Justierelemente wohl aus Metall gefertigt. Es wäre aber auch denkbar, neben metallischen Teilen auch Teile aus Kunststoff einzusetzen, und zwar sowohl für einen entsprechenden Bolzen, eine Hülse oder dergleichen als auch für Abstützteile, Laschen, Kontermuttern usw. Auch Kombinationen verschiedener Materialien sind denkbar.

## Patentansprüche

1. Justierelement mit einem Bolzen oder einer Hülse, welcher bzw. welche ein wenigstens über einen Teil seiner bzw. ihrer Länge verlaufendes Gewinde oder mehrere Gewindeabschnitte aufweist, wobei an einem Ende des Bolzens oder der Hülse ein Angriff für ein Drehwerkzeug ausgebildet ist und am anderen Ende Abstützteile, Laschen oder Kontermuttern montiert sind, **dadurch gekennzeichnet, daß** am besagten anderen Ende des Bolzens (4) oder der Hülse (19) ein zusätzlicher Angriff (16) für ein Drehwerkzeug zum Montieren des Justierelements ausgebildet ist und dass der zusätzliche Angriff (16) an der Rückseite des Abstützteiles (18, 20) oder der Lasche (5) vorgesehen ist.

2. Justierelement nach Anspruch 1, **dadurch gekennzeichnet, daß** der Bolzen (4) oder die Hülse (19) als in eine Bohrung oder eine Hülse (8) mit Innengewinde bei einem zu justierenden Baukörper einsetzbare Gewindestange ausgeführt ist, und daß am einen Ende des Bolzens (4) oder der Hülse (19) ein Abstützteil (18, 20) oder eine Lasche (5) um dessen bzw. deren Mittelachse (15) verdrehbar, jedoch gegen axiales Verschieben gesichert gehalten ist.

3. Justierelement nach Anspruch 1 oder 2, **dadurch gekennzeichnet, daß** an den beiden Enden des Bolzens (4) oder der Hülse (19) Angriffe (6, 16) für gleichartige Drehwerkzeuge ausgebildet sind.

4. Justierelement nach Anspruch 1 oder 2, **dadurch gekennzeichnet, daß** an den beiden Enden des Bolzens (4) oder der Hülse (19) Angriffe (6, 16) für verschiedenartige Drehwerkzeuge ausgebildet sind.

5. Justierelement nach Anspruch 1 oder 2, **dadurch gekennzeichnet, daß** an den beiden Enden des Bolzens (4) oder der Hülse (19) ein Innenangriff ausgebildet ist.

6. Justierelement nach Anspruch 1 oder 2, **dadurch gekennzeichnet, daß** an einem oder an beiden Enden des Bolzens (4) oder der Hülse (19) ein Schraubenzieherschlitz, ein Innen- oder Außenangriff oder dergleichen ausgebildet ist.

7. Justierelement nach Anspruch 1 oder einem der vorstehenden Ansprüche, **dadurch gekennzeichnet, daß** der Bolzen (4) über seine ganze Länge mit einem Gewinde versehen, also durchgehend als Gewindestange ausgeführt ist.

8. Justierelement nach Anspruch 1 oder 2, **dadurch gekennzeichnet, daß** am besagten anderen Ende des Bolzens (4) oder der Hülse (19) ein Zapfen oder ein z.B. im Durchmesser gegenüber Bolzen (4) oder Hülse (19) reduziertes Rohrstück ausgebildet ist, welcher bzw. welches durch eine Öffnung in einem Abstützteil (18, 20) oder einer Lasche (5) eingreift und an deren Unterseite durch einen Nietvorgang den Öffnungsrand hintergreift.

## Claims

1. An adjusting element with a pin or a bushing, which pin or which bushing has one screw-thread or several threaded portions extending at least over a part of its length, wherein at one end of the pin or the bushing there is formed an engagement portion for a rotary tool and at the other end there are installed support members, plates or lock nuts, **characterised in that** at said other end of the pin (4) or the bushing (19) there is formed an additional engagement portion (16) for a rotary tool for installing the adjusting element, and **in that** the additional engagement portion (16) is provided on the rear side of the support member (18,20) or the plate (5).

2. An adjusting element according to Claim 1, **characterised in that** the pin (4) or the bushing (19) is in the form of a threaded rod which can be inserted into a bore or a bushing (8) with an internal thread in a structural part to be adjusted, and **in that** at the end of the pin (4) or of the bushing (19) a support member (18,20) or a plate (5) is rotatable about the centre axis (15) thereof but is retained located against axial displacement.

3. An adjusting element according to Claim 1 or 2, **characterised in that** engagement portions (6,16) for like rotary tools are formed at both ends of the pin (4) or bushing (19).

4. An adjusting element according to Claim 1 or 2, **characterised in that** engagement portions (6,16) for different rotary tools are formed at both ends of the pin (4) or bushing (19).

5. An adjusting element according to Claim 1 or 2, **characterised in that** an internal engagement portion is formed at both ends of the pin (4) or bushing (19).

6. An adjusting element according to Claim 1 or 2, **characterised in that** a screwdriver slot, an internal or external engagement portion or the like is formed at one end or at both ends of the pin (4) or bushing (19).

7. An adjusting element according to Claim 1 or any one of the preceding claims, **characterised in that** over its entire length the pin (4) is provided with a screw-thread, i.e. is formed continuously as a threaded rod.

8. An adjusting element according to Claim 1 or 2, **characterised in that** at said other end of the pin (4) or the bushing (19) there is formed a peg or a tubular portion, for example of reduced diameter in relation to the pin (4) or the bushing (19), which peg or tubular portion engages through an opening in a support member (18,20) or a plate (5) and on the underside thereof engages behind the rim of the opening as a result of a riveting operation.

## Revendications

1. Elément d'ajustage comprenant une tige ou une douille présentant sur au moins une partie de sa longueur un filetage ou plusieurs sections de filetage, une extrémité de la tige ou de la douille comportant une prise pour un outil de rotation tandis que sur l'autre extrémité sont montées des parties d'appui, des pattes ou des contre-écrous,
**caractérisé en ce que**
sur cette autre extrémité de la tige (4) ou de la douille (19) est formée une autre prise (16) destinée à un outil de rotation servant au montage de l'élément d'ajustage, cette prise (16) étant prévue sur la face arrière de la partie d'appui (18, 20) ou de la patte (5).

2. Elément d'ajustage selon la revendication 1,
**caractérisé en ce que**
la tige (4) ou la douille (19) est constituée par une tige filetée qui peut être insérée dans un alésage ou dans une douille (8) portant un filetage interne et située dans un corps à ajuster, une partie d'appui (18, 20) ou une patte (5) pouvant tourner autour de son axe médian (15) mais sans pouvoir coulisser axialement, étant maintenue à une extrémité de la tige (4) ou de la douille (19).

3. Elément d'ajustage selon l'une quelconque des revendications 1 ou 2,
**caractérisé en ce qu'**
il est prévu aux deux extrémités de la tige (4) ou de la douille (19) des prises (6, 16) pour des outils de rotation de même genre.

4. Elément d'ajustage selon l'une quelconque des revendications 1 ou 2,
**caractérisé en ce qu'**
il est prévu aux deux extrémités de la tige (4) ou de la douille (19) des prises (6, 16) pour des outils de rotation de genres différents.

5. Elément d'ajustage selon l'une quelconque des revendications 1 ou 2,
**caractérisé en ce qu'**
à chaque extrémité de la tige (4) ou de la douille (19) est prévue une prise à empreinte creuse.

6. Elément d'ajustage selon l'une quelconque des revendications 1 ou 2,
**caractérisé en ce que**
sur une ou sur les deux extrémités de la tige (4) ou de la douille (19) il est prévu une fente pour tournevis, une empreinte interne ou externe ou similaire.

7. Elément d'ajustage selon l'une quelconque des revendications précédentes,
**caractérisé en ce que**
la tige (4) est filetée sur toute sa longueur, donc une tige filetée continue.

8. Elément d'ajustage selon l'une quelconque des revendications 1 ou 2,
**caractérisé en ce qu'**
sur cette autre l'extrémité de la tige (4) ou de la douille (19) est réalisé un tourillon ou par exemple une partie tubulaire de diamètre réduit par rapport à celui de la tige (4) ou de la douille (19) et qui est engagée dans une ouverture pratiquée dans la partie d'appui (18, 20) ou une patte (5), puis par rivetage sur la face inférieure de celle-ci, est mise en prise avec le bord de l'ouverture.
